# DEMANDE DE BREVET EUROPEEN

(11) **EP 2 587 776 A1**
(43) Date de publication de la demande: **01.05.2013**
(21) Numéro de dépôt: 12190214.2
(22) Date de dépôt: 26.10.2012
(51) Int. Cl.: H04M 1/56, H04M 1/65, H04M 3/533, H04M 3/42

(54) **Procédé de stockage d'un message destiné à un utilisateur particulier d'un terminal partage, dépôt et restitution d'un tel message.**

(30) Priorité: 28.10.2011 FR 1159819
(71) Demandeur: FRANCE TELECOM, 75015 Paris (FR)
(72) Inventeur: Moncomble, Ghislain, 22300 LANNION (FR)
(74) Mandataire: Delumeau, François Guy

(57) **Abrégé**

Ce procédé de stockage d'un message (MSG) adressé par un terminal appelant (CG) à un terminal appelé (CD), comporte :
- une étape (E10) de recherche d'au moins un carnet d'adresses (CAi) associé audit terminal appelé et comportant des données d'identification (IDCG) du terminal appelant (CG);
- une étape (E20) d'identification, à partir dudit au moins un carnet d'adresses (CAi), d'au moins un destinataire potentiel (DPi) dudit message parmi les utilisateurs dudit terminal appelé (CD);
- une étape (E30) de sélection d'au moins un destinataire effectif (DEi) déterminé à partir dudit au moins un destinataire potentiel (DEi) ; et
- une étape (E40) de mémorisation dudit message (MSG) dans au moins un espace réservé accessible uniquement par ledit au moins un destinataire effectif (DEi), sur présentation de son identifiant (IDi), chaque destinataire effectif pouvant accéder à au moins un desdits espaces réservés pour obtenir restitution dudit message.

## Description

### Arrière plan de l'invention

La présente invention se situe dans le domaine technique des systèmes de messageries dans un réseau de télécommunications.

Elle s'applique en particulier, mais de façon non limitative, à une messagerie vocale.

De façon connue, de telles messageries permettent, lorsqu'un terminal appelé ne répond pas, de diffuser une annonce à l'appelant pour l'inviter à déposer un message, celui-ci pouvant être restitué ultérieurement par l'utilisateur du terminal appelé.

Malheureusement, dans l'état actuel de la technique, on ne connait pas de solution satisfaisante permettant de déposer un message destiné uniquement à certains utilisateurs d'un terminal partagé, par exemple au sein d'une famille ou d'une communauté.

L'invention vise notamment à répondre à ce problème particulier.

### Objet et résumé de l'invention

Ainsi, et selon un premier aspect, l'invention concerne un procédé de stockage d'un message adressé par un terminal appelant à un terminal appelé, ce procédé comportant :
- une étape de recherche d'au moins un carnet d'adresses associé au terminal appelé et comportant des données d'identification du terminal appelant ;
- une étape d'identification, à partir de ces carnets d'adresses, d'au moins un destinataire potentiel du message parmi les utilisateurs du terminal appelé ;
- une étape de sélection d'au moins un destinataire effectif déterminé à partir de ce ou de ces destinataires potentiels ; et
- une étape de mémorisation de ce message dans au moins un espace réservé accessible uniquement par un ou plusieurs destinataires effectifs sur présentation de son identifiant, chaque destinataire effectif pouvant accéder à au moins un de ces espaces réservés pour obtenir restitution du message.

Corrélativement, l'invention concerne un dispositif de stockage d'un message adressé par un terminal appelant à un terminal appelé, ce dispositif comportant :
- des moyens de recherche d'au moins un carnet d'adresses associé au terminal appelé et comportant des données d'identification du terminal appelant ;
- des moyens d'identification, à partir de ces carnets d'adresses, d'au moins un destinataire potentiel du message parmi les utilisateurs du terminal appelé ;
- des moyens de sélection d'au moins un destinataire effectif déterminé à partir de ce ou de ces destinataires potentiels ; et
- des moyens de mémorisation de ce message dans au moins un espace réservé accessible uniquement par un ou plusieurs destinataires effectifs sur présentation de son identifiant, chaque destinataire effectif pouvant accéder à au moins un de ces espaces réservés pour obtenir restitution du message.

On notera que l'identifiant d'un utilisateur au sens de l'invention recouvre toute information permettant de distinguer un utilisateur du terminal appelé parmi les autres, comme un pseudonyme par exemple. Il ne s'agit pas d'un mode de passe ou d'un code secret.

Le procédé selon l'invention permet ainsi aux différents utilisateurs du terminal appelé de consulter ses messages sans que les autres utilisateurs n'aient accès à ses messages ni même connaissance de l'existence de ces messages.

L'invention peut être utilisée pour des terminaux appelés et appelants de type fixes ou mobiles. Elle repose essentiellement sur une utilisation des carnets d'adresses, le destinataire d'un message vocal reçu d'un contact appelant étant déterminé à partir des utilisateurs référençant ce contact dans leurs carnets d'adresses.

Dans ce document, on appellera « destinataire potentiel d'un message vocal », tout utilisateur du terminal appelé possédant un carnet d'adresses dans lequel figure ce contact et « destinataire effectif d'un message vocal », un utilisateur du terminal appelé choisi parmi ces destinataires potentiels ou à partir de ces destinataires potentiels.

L'invention présente une grande souplesse, puisqu'il suffit de créer ou configurer les carnets d'adresses d'un terminal pour changer les règles de dépôt des messages vocaux destinés à ce terminal et plus précisément pour changer les règles de dépôt des messages vocaux destinés à un ou plusieurs des utilisateurs de ce terminal.

L'invention est applicable également dans le cas où un même utilisateur disposerait de plusieurs carnets d'adresse, par exemple un carnet d'adresse à usage privé et un carnet d'adresse à usage professionnel. Dans ce cas, soit l'espace réservé à cet utilisateur peut être commun aux deux carnets d'adresse, l'utilisateur bénéficiant d'un identifiant unique pour accéder à cet espace réservé, soit l'utilisateur dispose de 2 espaces réservés distincts, accessibles chacun par un identifiant distinct.

Dans un mode particulier de l'invention, les destinataires effectifs d'un message sont les destinataires potentiels de ce message, à savoir tous les utilisateurs du terminal qui comportent le contact appelant dans leur carnet d'adresses.

Selon l'invention, on peut également créer des groupes d'utilisateurs, les destinataires effectifs d'un message vocal comportant au moins un utilisateur du terminal appartenant au groupe de l'un au moins des destinataires potentiels.

Dans un mode particulier de réalisation de l'invention, en cas d'échec de ladite étape de recherche, par exemple lorsque l'appel provient d'un terminal appelé non répertorié dans les carnets d'adresses, ou dont l'identifiant est masqué, aucun destinataire effectif n'est sélectionné et le procédé selon l'invention ne permet pas le dépôt du message. Ce mode de réalisation de l'invention évite que des messages vocaux soient déposés par des contacts inconnus des utilisateurs du terminal.

Dans un mode particulier de réalisation de l'invention, en cas d'échec de ladite étape de recherche, par exemple lorsque l'appel provient d'un terminal appelé non répertorié dans les carnets d'adresses, ou dont l'identifiant est masqué, les destinataires effectifs peuvent être choisis parmi :
- tous les utilisateurs du terminal appelé ; ou
- un unique destinataire effectif dit « privilégié » ;ou
- un unique destinataire effectif dit « TOUS » permettant d'implémenter une boîte de messages partagée par tous les utilisateurs du terminal.

Le destinataire « TOUS » est un utilisateur virtuel qui dans le cadre de notre invention permet d'une part de conserver les messages d'origine non identifiée, mais également ceux destinés à tous les utilisateurs du terminal. Dans ce cadre, le carnet d'adresses du membre « TOUS » comprend tous les contacts communs à tous les utilisateurs du terminal partagé (qui n'ont donc pas besoin de les noter chacun séparément dans leurs carnets d'adresses). Il ne s'agit en aucun cas d'une union de tous les carnets d'adresses.

Dans un mode particulier de réalisation, le procédé de stockage selon l'invention comporte, lorsqu'au moins deux destinataires potentiels ont été identifiés :
- une étape d'envoi des identifiants des destinataires potentiels au terminal appelant ; et
- une étape de réception d'une réponse comportant le ou les identifiants des destinataires effectifs.

Ce mode de réalisation permet de faire choisir le ou les destinataires effectifs du message vocal par l'utilisateur du terminal appelant, lorsque le choix se pose.

L'invention vise aussi le terminal appelant dans ce mode particulier de réalisation.

Par conséquent, l'invention concerne aussi, un procédé pouvant être mis en oeuvre par un terminal appelant pour déposer un message destiné à au moins un utilisateur d'un terminal appelé, ce procédé comportant :
- une étape d'appel dudit terminal appelé ;
- une étape de réception, en provenance d'un serveur de messagerie associé au terminal appelé, de l'identifiant d'au moins deux destinataires potentiels auxquels le message peut être destiné parmi les utilisateurs dudit terminal appelé ;
- une étape de sélection de l'identifiant d'au moins un destinataire effectif parmi les destinataires potentiels ;
- une étape d'envoi de l'identifiant du ou des destinataires effectifs audit serveur ; et
- une étape d'envoi dudit message au serveur pour que ledit message soit mémorisé dans au moins un espace réservé accessible uniquement par ce ou ces destinataires effectifs.

Corrélativement, l'invention concerne un terminal comportant :
- des moyens d'appel d'un terminal ;
- des moyens de réception, en provenance d'un serveur de messagerie associé au terminal appelé, de l'identifiant d'au moins deux destinataires potentiels auxquels le message peut être destiné parmi les utilisateurs du terminal appelé ;
- des moyens de sélection de l'identifiant d'au moins un destinataire effectif parmi les destinataires potentiels ;
- des moyens d'envoi de l'identifiant du ou des destinataires effectifs audit serveur ; et
- des moyens d'envoi dudit message au serveur pour que ledit message soit mémorisé dans au moins un espace réservé accessible uniquement par ce ou ces destinataires effectifs.

Dans un mode particulier de réalisation, le procédé de dépôt de message selon l'invention comporte une étape de mémorisation des identifiants de destinataires potentiels en association avec le numéro du terminal appelé.

Cette caractéristique permet d'enrichir le carnet d'adresses de l'appelant et la présentation des utilisateurs potentiels du terminal appelé à l'appelant, avant même la numérotation.

L'identifiant du destinataire effectif sélectionné par le terminal appelant peut éventuellement être présenté au terminal appelé, pour permettre son affichage sur un écran du terminal appelé.

Dans un mode particulier de réalisation, au moins un des contacts du carnet d'adresses d'un destinataire potentiel est associé à un indicateur de mode, spécifiant un mode de traitement d'appel. Cet indicateur de mode peut prendre de nombreuses valeurs, dont de façon exhaustive l'une des valeurs suivantes :
- « MODE CLASSIQUE » : mode dans lequel on commence par faire sonner le terminal appelé, l'appel étant redirigé vers sa messagerie vocale en cas de non réponse après un nombre de sonneries prédéterminé ;
- « MODE MESSAGERIE SEULE » : mode dans lequel l'appel est directement redirigé vers la messagerie vocale du terminal appelé, sans faire sonner ce terminal ;
- « MODE TRANSERT D'APPEL» : mode dans lequel l'appel est directement redirigé vers un autre numéro.

Ce mode de réalisation particulier permet un traitement différencié de l'appel selon l'indicateur de mode associé au destinataire effectif de cet appel, ayant été identifié parmi les destinataires potentiels.

Ainsi, selon un premier scénario de mise en oeuvre de l'invention, lorsque les données d'identification du terminal appelant ne sont contenues dans aucun des carnets d'adresse du terminal appelé, le message peut être redirigé vers un espace de stockage partagé entre les différents utilisateurs du terminal appelé, par exemple une boîte de messages partagée par tous les utilisateurs du terminal.

Selon un autre scénario de mise en oeuvre de l'invention, lorsque les données d'identification du terminal appelant sont contenues dans un ou plusieurs des carnets d'adresses du terminal appelé, le message peut être dupliqué dans les espaces réservés aux destinataires effectifs, la redirection vers un espace réservé se faisant soit directement soit après un certain nombre de sonneries en fonction d'un indicateur de mode défini pour chacun des destinataires effectifs.

Dans un mode particulier de réalisation, le message est mémorisé directement dans un espace réservé à un destinataire effectif lorsque le carnet d'adresses de ce destinataire effectif est associé à l'indicateur de mode déterminé « MODE MESSAGERIE SEULE », ou en variante lorsque cet indicateur de mode « MODE MESSAGERIE SEULE » est associé au contact concerné (l'appelant donc) de la messagerie de cet utilisateur.

On rappelle que dans un mode particulier de l'invention, l'utilisateur du terminal appelant peut choisir le ou les destinataires effectifs du message parmi une liste de destinataires potentiels qui lui est proposée.

A titre d'exemples, d'autres modes pourraient permettre le transfert par mail, le transfert par mail après transcription texte, le transfert par mail après transcription texte et traduction, l'envoi d'un SMS à un numéro prédéterminé, ...

Dans un mode particulier de réalisation, l'indicateur de mode est associé non pas à un ou plusieurs contacts de l'utilisateur, mais à cet utilisateur lui-même au travers de la table « MEMBRES », et il s'applique alors à l'ensemble des contacts dudit utilisateur.

Dans un autre mode particulier de réalisation, un mode par défaut est toujours appliqué, par exemple le mode « MODE CLASSIQUE » décrit ci-dessus, et un indicateur de mode associé par exemple à l'utilisateur ne serait activé que sur une plage de temps calendaire prédéterminée, cette plage de temps pouvant éventuellement dépendre de cet utilisateur.

Ce mode de réalisation pourrait par exemple définir pour cet utilisateur le mode « MODE CLASSIQUE » durant les horaires de travail, et le mode « MODE MESSAGERIE SEULE » en dehors des heures de travail.

Ce mode de réalisation permettrait par exemple à un utilisateur d'utiliser son téléphone mobile personnel non partagé pour son usage privé et pour son usage professionnel, en créant deux membres virtuels (distinguables par deux identifiants différents associés au même utilisateur, personne physique) et leurs carnets d'adresses respectifs, chacun ayant un indicateur de mode dépendant de plages de temps opposées ; par exemple « MODE CLASSIQUE » le week-end et en dehors des heures de travail, « MODE MESSAGERIE SEULE » le reste du temps pour l'usage privé, les plages de temps étant inversées pour l'usage professionnel.

Dans un autre mode particulier de réalisation, une gestion de conflits de mode peut permettre de définir des priorités si des indicateurs de mode incompatibles sont associés à un ou plusieurs contacts de l'utilisateur et à l'utilisateur lui-même. Par exemple, le mode de contact associé à un contact pourrait être prioritaire par rapport au mode associé à un utilisateur. Cet exemple particulier de réalisation de l'invention permettrait à l'utilisateur d'être joignable par un contact même pendant les heures de travail.

Dans un mode particulier de réalisation, lorsque le mode associé au terminal appelant est le mode « MODE CLASSIQUE », le procédé de stockage selon l'invention comporte :
- une étape pour vérifier une condition préalable à l'envoi des identifiants de destinataires potentiels au terminal appelant ; et
- une étape pour faire sonner le terminal appelé sans attendre si cette condition n'est pas vérifiée ou à l'issue d'un délai déterminé en cas de non réception de la réponse comportant les identifiants de destinataires effectifs.

La condition préalable peut notamment être choisie parmi :
- le fait que ledit terminal appelé est partagé ;
- le fait que ledit terminal appelant est authentifié ;
- le fait que ledit terminal appelant est enregistré dans une liste de contacts autorisés ;
- la présence d'une donnée représentative d'une autorisation explicite d'un utilisateur dudit terminal appelé pour la mise en oeuvre de ce service ;
- la vérification d'un paramètre représentatif d'une autorisation donnée par un utilisateur dudit terminal appelé ;
- la présence desdites données d'identification du terminal appelant dans au moins deux dits carnets d'adresses.

Dans un mode particulier de réalisation, le procédé de stockage selon l'invention comporte une étape d'envoi d'une annonce d'accueil au terminal appelant, cette annonce étant choisie en fonction desdits destinataires potentiels.

Dans un mode particulier de réalisation, lorsque plusieurs destinataires potentiels ont été identifiés, cette annonce vocale est choisie aléatoirement parmi les annonces vocales de ces destinataires potentiels ; et si un seul destinataire potentiel a été identifié, on diffuse l'annonce de ce destinataire.

Dans un mode particulier de réalisation, la restitution du message à un destinataire effectif est soumise à des règles complémentaires prédéterminées.

Ces règles complémentaires sont utilisées avant la restitution d'un message à un destinataire afin de déterminer à quel(s) destinataire(s) le message doit être restitué, et lorsqu'il y a plusieurs destinataires identifiés pour cette restitution, si un ordre de priorité doit être respecté lors de cette restitution. La restitution s'effectue alors conformément à ces règles complémentaires.

En particulier, ces règles complémentaires sont des règles définissant un ordre de priorité entre des destinataires effectifs pour la restitution du message.

Ces règles peuvent par exemple définir une priorité de restitution du message pour un moins un des destinataires effectifs.

Elles peuvent aussi définir l'identifiant d'un destinataire effectif dit « privilégié » et n'autoriser la restitution du message aux autres destinataires effectifs qu'après restitution dudit message au destinataire effectif privilégié et autorisation explicite de ce destinataire effectif privilégié.

Dans un mode particulier de réalisation, le message est enregistré dans un unique espace réservé accessible par tous les destinataires effectifs.

En variante, le message est enregistré, pour chaque destinataire effectif, dans un espace réservé accessible uniquement par ce destinataire effectif.

Dans un mode particulier de réalisation, les données d'identification de l'appelant sont constituées par au moins une partie du numéro du terminal appelant.

Cette caractéristique permet de rediriger les messages vocaux venant d'une même entreprise vers un même destinataire effectif sélectionné sur la base du préfixe du numéro de cette entreprise.

Elle permet aussi de rediriger les messages vocaux venant d'un même pays vers un même destinataire effectif sélectionné sur la base de l'indicatif international de ce pays.

Dans un mode particulier de réalisation, le procédé de stockage d'un message selon l'invention comporte une étape de transfert du message vers un terminal du destinataire effectif, éventuellement après une conversion selon un format compatible avec ce terminal.

Selon un troisième aspect, l'invention vise aussi un procédé de restitution du message déposé par le terminal appelant.

Par conséquent, l'invention concerne un procédé de restitution d'un message enregistré dans un espace réservé accessible uniquement par un destinataire effectif, ce procédé comportant :
- une étape de réception d'une requête, en provenance d'un terminal, pour demander la restitution dudit message ;
- une étape de restitution dudit message uniquement si cette requête comporte un identifiant dudit destinataire effectif.

Corrélativement, l'invention concerne également un serveur de messagerie apte à restituer un message enregistré dans un espace réservé accessible uniquement par un destinataire effectif, ce serveur comportant :
- des moyens de réception d'une requête en provenance d'un terminal, pour demander la restitution dudit message ;
- des moyens de restitution dudit message uniquement si ladite requête comporte un identifiant du destinataire effectif.

L'invention vise aussi un terminal susceptible d'être partagé par plusieurs utilisateurs, ce terminal comportant une interface homme machine permettant de définir au moins un carnet d'adresses comportant des données d'identification de contacts, les messages déposés pour ce terminal par l'un de ces contacts, en cas de non réponse du terminal, étant destinés à être mémorisés dans un espace réservé à un ou plusieurs destinataires choisis parmi des utilisateurs du terminal à partir des carnets d'adresses comportant ce contact.

Dans un mode particulier de réalisation, le procédé de restitution d'un message selon l'invention comporte une étape de vérification d'un code secret dudit destinataire effectif pour autoriser la restitution du message.

Dans un mode particulier de réalisation, le procédé de restitution selon l'invention comporte une étape de vérification de règles complémentaires prédéterminées avent la restitution.

Dans un mode particulier de réalisation, les différentes étapes des procédés de stockage, de dépôt et de restitution selon l'invention sont déterminées par des instructions de programmes d'ordinateurs.

En conséquence, l'invention vise aussi :
- un programme d'ordinateur sur un support d'informations, ce programme étant susceptible d'être mis en oeuvre par un ordinateur, ce programme comportant des instructions adaptées à la mise en oeuvre du procédé de stockage tel que mentionné ci-dessus.
- un programme d'ordinateur sur un support d'informations, ce programme étant susceptible d'être mis en oeuvre par un ordinateur, ce programme comportant des instructions adaptées à la mise en oeuvre du procédé de dépôt tel que mentionné ci-dessus ; et
- un programme d'ordinateur sur un support d'informations, ce programme étant susceptible d'être mis en oeuvre par un ordinateur, ce programme comportant des instructions adaptées à la mise en oeuvre du procédé de restitution tels que mentionné ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention apparaîtront à la lumière de la description qui suit, faite en référence aux dessins annexés dans lesquels :
- la figure 1 représente un réseau de télécommunication comportant un serveur de communication et un terminal conformes à un mode particulier de réalisation de l'invention ;
- la figure 2 représente une base de données pouvant être utilisée par un serveur conforme à un mode particulier de réalisation de l'invention ;
- les figures 3A et 3B représentent les principales étapes d'un procédé de stockage d'un message selon deux modes particuliers de réalisation de l'invention ;
- la figure 4A représente les principales étapes d'un procédé de dépôt d'un message conforme à l'état actuel de la technique ;
- la figure 4B représente les principales étapes d'un procédé de dépôt conforme à un mode particulier de réalisation de l'invention ; et
- la figure 5 représente les principales étapes d'un procédé de restitution de message conforme à un mode particulier de réalisation de l'invention.

### Description détaillée de plusieurs modes de réalisation

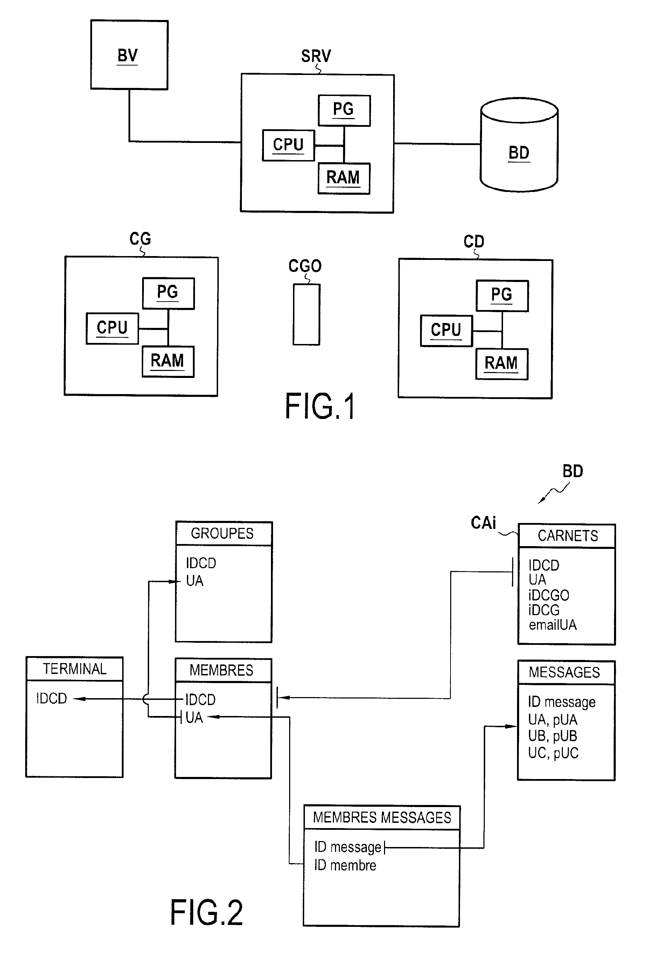

La figure 1 représente un réseau de télécommunications comportant :
- deux terminaux CD, CG conformes à l'invention,
- un serveur SRV de messagerie vocale conforme à l'invention et associé au terminal CD ; et
- un terminal conventionnel CG0.

Le serveur de messagerie SRV comporte une zone de mémoire dans laquelle est enregistrée une base de données BD représentée en détails à la figure 2.

Cette base de données BD comporte :
- une table « TERMINAL » comportant l'identifiant IDCD du terminal CD, à savoir, dans cet exemple son numéro MSISDN ;
- une table « MEMBRES » comportant un enregistrement pour chacun des utilisateurs UA, UB, UC du terminal CD. Cet enregistrement comporte l'identifiant de l'utilisateur et un lien vers l'enregistrement du terminal CD dans la table « TERMINAL ». Sur la figure, seul l'enregistrement de l'utilisateur UA est représenté. ;
- une table « CARNETS » comportant trois enregistrements, un pour chacun des contacts d'un des utilisateurs UA, UB, UC du terminal CD. Chaque enregistrement comporte un lien vers l'enregistrement correspondant à l'utilisateur dans la table « MEMBRES » et les références du contact concerné. Sur la figure 2, seul un contact de l'utilisateur UA est représenté, celui correspondant au terminal IDCG0. On suppose que les enregistrements contacts IDCG0, IDCG des terminaux CG0, CG faisant référence chacun au membre
   « UA » sont stockés dans la table « CARNETS . L'ensemble des enregistrements de la
table « CARNETS » faisant référence à un membre de la table « MEMBRES » constitue un carnet d'adresses dudit membre au sens de l'invention ;
- une table « GROUPES » comportant un enregistrement pour un groupe d'utilisateurs du terminal CD auquel appartient un utilisateur donné. Sur la figure 2, seul l'enregistrement du groupe auquel appartient l'utilisateur UA est représenté. On suppose que l'utilisateur UC appartient à ce groupe et que l'utilisateur UB n'appartient à aucun groupe ;
- une table « MESSAGES » comportant un enregistrement pour chaque message vocal mémorisé par le serveur SRV, cet enregistrement comportant un lien vers l'enregistrement d'une table « MEMBRES MESSAGES » correspondant ; et
- cette table « MEMBRES MESSAGES », celle-ci comportant un enregistrement pour chaque couple message vocal mémorisé par la boite vocale BV, membre autorisé à consulter ce message, cet enregistrement comportant un lien vers le message correspondant dans la table « MESSAGES » et un lien vers le membre correspondant dans la table « MEMBRES ».

Dans le mode de réalisation décrit ici, l'enregistrement d'un membre de la table de « MEMBRES » comporte un champ « SECRET » permettant de masquer ce membre aux autres utilisateurs du terminal, y compris à l'utilisateur privilégié.

Dans cet exemple de réalisation, le mode déjà décrit « MODE MESSAGERIE SEULE » est le mode par défaut, ce mode dépendant cependant des plages horaires précitées.

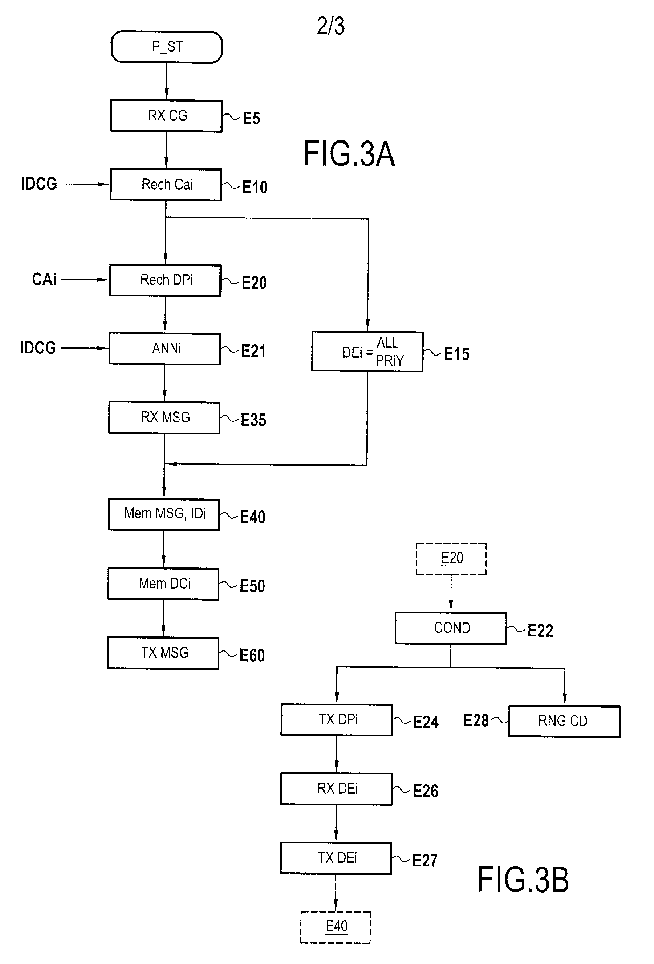

La figure 3A représente les principales étapes d'un procédé de stockage d'un message selon un premier mode de réalisation de l'invention, ce procédé étant mis en oeuvre par le serveur de messagerie vocale SRV.

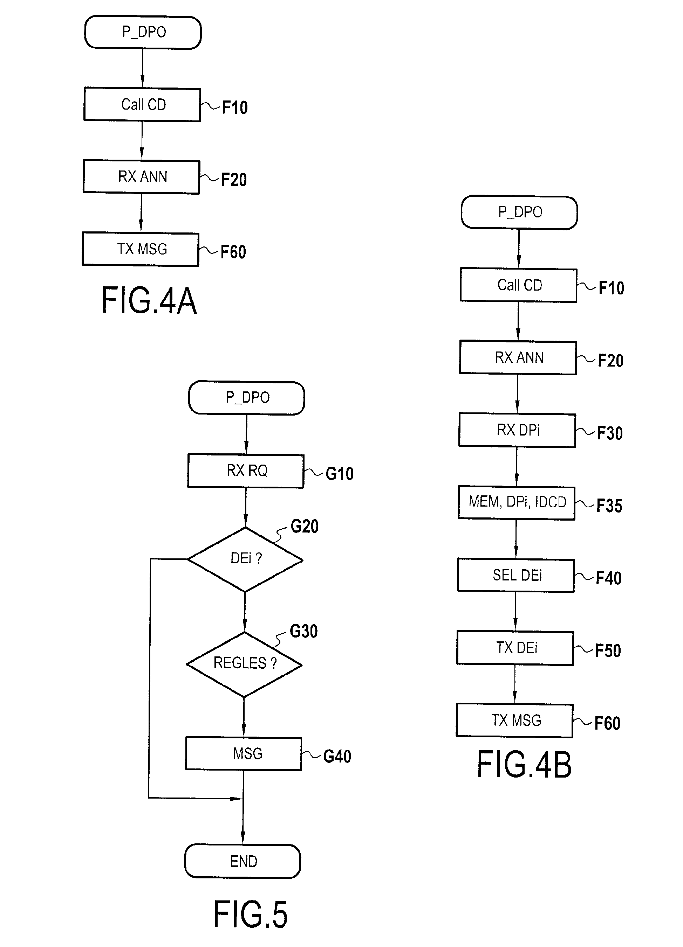

La figure 4A représente les principales étapes d'un procédé de dépôt d'un message conforme à l'état actuel de la technique, ce procédé étant mis en oeuvre par le terminal appelant conventionnel CG0.

On suppose que le terminal CG0 appelle le terminal CD au cours d'une étape F10, que celui-ci ne répond pas et que l'appel est redirigé vers le serveur vocal SRV associé au terminal appelé CD au cours d'une étape E5.

Conformément à l'invention, au cours d'une étape E10, le serveur de messagerie vocale SRV recherche un carnet d'adresses CAi, associé au terminal appelé CD et comportant des données d'identification IDCG0 du terminal appelant CG0. Dans l'exemple décrit ici, les données d'identification du terminal IDCG0 sont son numéro MSISDN. En variante, ces données peuvent être constituées par une partie seulement de ce numéro.

Dans l'exemple de réalisation décrit ici, le résultat de la recherche est positif, le contact CG0 ayant été trouvé dans les enregistrements respectifs des utilisateurs UA et UB dans la table « CARNETS ».

Le résultat de la recherche de l'étape E20 étant positif, le serveur de messagerie vocale SRV, identifie les destinataires potentiels d'un message vocal qui pourrait être déposé par le terminal appelant.

Dans le mode de réalisation décrit ici, ces destinataires potentiels sont les utilisateurs UA, UB auxquels sont associés ces carnets d'adresses.

Dans ce mode de réalisation, si aucun destinataire potentiel n'est trouvé, à défaut d'autres restrictions, la liste de l'ensemble des utilisateurs du terminal CD est retournée au terminal appelant CG, à l'exception de ceux dont le champ « SECRET » est actif.

Dans le mode de réalisation décrit ici, le serveur de messagerie vocale SRV envoie, au cours d'une étape E21, une annonce d'accueil ANN au terminal appelant CNG0, cette annonce étant choisie aléatoirement parmi celles des destinataires potentiels UA, UB.

On suppose ici que l'annonce vocale choisie est celle du membre UB et qu'elle est reçue par le terminal appelant CG0 au cours d'une étape F20.

Au cours d'une étape E30, le serveur de messagerie vocale SRV sélectionne, à partir des destinataires potentiels UA, UB, les destinataires effectifs d'un message vocal qui pourrait être déposé par le terminal appelant CG0.

Dans le mode de réalisation décrit ici, ces destinataires effectifs sont :
- les destinataires potentiels UA, UB si les fonctionnalités de la table « GROUPES » ne sont pas implémentées ; et
- les destinataires potentiels UA, UB et les utilisateurs du terminal appelé CD appartenant à un même groupe que l'un au moins desdits destinataires potentiels UA, UB, à savoir l'utilisateur UC si les fonctionnalités de la table « GROUPES » sont implémentées.

Il se peut que l'étape de recherche E10 se solde par un échec, par exemple lorsque l'identifiant du terminal appelant CG est masqué, ou lorsque ce terminal n'est identifié dans aucun des carnets d'adresses. Dans ce cas, dans le mode de réalisation décrit ici, le serveur de messagerie vocale SRV détermine, au cours d'une étape E15, que les destinataires effectifs du message vocal potentiel sont :
- tous les utilisateurs UA, UB, UC, UD du terminal appelé ; ou
- un unique destinataire effectif dit « privilégié », par exemple l'utilisateur UA ; ou
- l'unique destinataire effectif « TOUS » déjà décrit, permettant d'implémenter une boîte de messages partagée par tous les utilisateurs du terminal.

On suppose que le terminal CG0 dépose un message vocal MSG au cours d'une étape F60 et que ce message vocal est reçu par le serveur de messagerie vocale SRV au cours d'une étape E35.

Conformément à l'invention, le message vocal MSG est mémorisé, au cours d'une étape E40 dans un espace réservé accessible aux destinataires effectifs UA, UB, UC et interdit aux autres utilisateurs du terminal CD, en l'espèce à l'utilisateur UD. Pour ce faire, trois enregistrements correspondant à ce message et relatifs respectivement aux destinataires potentiels UA, UB et UC sont créés dans la table « MEMBRES MESSAGES ». Aucun enregistrement correspondant à ce message n'est créé pour l'utilisateur UD, si bien que celui-ci n'aura pas accès à ce message.

Dans le mode de réalisation décrit ici, le message vocal MSG est enregistré E40 dans une boite vocale unique BV accessible par chacun desdits destinataires effectifs UA, UB, UC sur présentation de leurs identifiants et d'un code secret.

En variante, le message MSG pourrait être enregistré dans trois espaces réservés différents, à savoir un pour chacun des destinataires effectifs UA, UB, UC.

Dans le mode de réalisation décrit ici, la table « MEMBRES » comporte un membre virtuel « TOUS », celui-ci constituant un destinataire effectif au sens de l'invention pour un message vocal destiné à tous les utilisateurs du terminal. Dans ce cas, chacun des utilisateurs du terminal CD peut accéder à la boite vocale BV sur la seule présentation de son identifiant, la boite vocale n'étant pas protégée par des codes secrets.

Au cours de cette même étape E40, le serveur de messagerie vocale SRV créé un enregistrement dans la table « MESSAGES » puis trois enregistrements dans la table « MEMBRES MESSAGES » pour associer le message MSG aux identifiants de chacun des destinataires effectifs UA, UB, UC. Dans le mode de réalisation décrit ici, un indicateur de lecture est positionné à NULL dans chacun de ces enregistrements pour représenter le fait que ce message n'a pas été restitué ; un champ d'horodatage de lecture est aussi positionné à NULL.

Dans le mode de réalisation décrit ici, le serveur de messagerie vocale SRV enregistre, au cours d'une étape E50, des données complémentaires DCi, utilisant des règles d'accès prédéfinies à l'espace réservé BV pour la restitution du message MSG.

Dans l'exemple décrit ici, ces règles sont paramétrables uniquement par l'utilisateur privilégié UA. En variante elles pourraient être paramétrables par d'autres utilisateurs, voire par tous.

Dans l'exemple de réalisation décrit ici, ces données complémentaires sont des indicateurs de priorité pUA, pUB, pUC qui définissent que le message MSG doit être restitué en priorité à l'utilisateur UB, puis indépendamment à l'utilisateur UA ou UC. On notera que lorsque ces indicateurs de priorité existent, ils peuvent être utilisés à l'étape E15, pour diffuser à l'appelant, l'annonce vocale de l'utilisateur prioritaire.

Dans l'exemple décrit ici, l'enregistrement du carnet d'adresses de l'utilisateur UA comporte une adresse de courriel « emailUA » et le serveur de messagerie vocal SRV, convertit le message vocal MSG en format texte puis le transfère à cette adresse au cours d'une étape E60.

La figure 5 représente les principales étapes d'un procédé de restitution de message conforme à un mode particulier de réalisation de l'invention.

Ce procédé de restitution est mis en oeuvre par le serveur de messagerie vocale SRV lorsqu'il reçoit au cours d'une étape G10, une requête RQ, en provenance du terminal CD pour demander la restitution du message MSG.

Au cours d'un test G20, le serveur de messagerie vocale SRV vérifie si la requête comporte un identifiant d'un destinataire effectif UA, UB, UC de ce message, par consultation de la table « MEMBRES MESSAGES ».

Si ce n'est pas le cas le résultat du test G20 est négatif et le message n'est pas restitué.

Nous supposerons ici que la requête comporte l'identifiant et le code secret de l'utilisateur UA.

Dans le mode de réalisation décrit ici, le serveur de messagerie vocale SRV vérifie, au cours d'un test G30 si une ou des règles complémentaires doivent être respectées pour la restitution et la consultation du message.

En l'espèce, dans cet exemple, le serveur SRV identifie la règle complémentaire, définissant une règle de priorité selon laquelle le message MSG doit être en priorité restitué à l'utilisateur UB.

La restitution est alors effectuée à l'étape G40, conformément à la règle complémentaire ou aux règles complémentaires identifiées à l'étape G30.

Un deuxième mode de réalisation de l'invention est maintenant décrit en référence aux figures 3B et 4B.

Dans cet exemple, le terminal appelant CG est un terminal conforme à l'invention. Il met en oeuvre le procédé de dépôt de message de la figure 4B.

Dans un mode particulier de réalisation, au moins un des contacts du carnet d'adresses d'un destinataire potentiel est associé à un indicateur de mode. Cet indicateur de mode peut prendre de nombreuses valeurs, dont de façon exhaustive l'une des valeurs suivantes :
- « MODE CLASSIQUE » : mode dans lequel on commence par faire sonner le terminal appelé, l'appel étant redirigé vers sa messagerie vocale en cas de non réponse après un nombre de sonneries prédéterminé ;
- « MODE MESSAGERIE SEULE » : mode dans lequel l'appel est directement redirigé vers la messagerie vocale du terminal appelé, sans faire sonner ce terminal ;
- « MODE TRANSERT D'APPEL» : mode dans lequel l'appel est directement redirigé vers un autre numéro.

On suppose dans cet exemple que le mode de contact associé au terminal appelant est le mode « MODE CLASSIQUE».

Dans cet exemple particulier, le serveur de messagerie vocale SRV conforme à l'invention met en oeuvre le procédé de stockage de la figure 3B.

Dans cet exemple, après avoir identifié les destinataires potentiels UA, UB, UC du message MSG, le serveur de messagerie vocale SRV détermine au cours d'une étape E22, si des conditions COND sont remplies pour envoyer les identifiants de ces destinataires potentiels au terminal appelant CG.

Ce test est effectué avant de faire sonner le terminal appelé CD.

Dans l'exemple de réalisation décrit ici, la condition consiste à vérifier que les enregistrements correspondant aux données d'identification IDCG du terminal appelant CG sont présents dans au moins deux dits carnets d'adresses, autrement dit que la liste d'enregistrement pointe sur deux membres différents au moins.

Dans cet exemple, c'est le cas, les données IDCG étant présentes dans les carnets d'adresse des utilisateurs UA et UB.

Par conséquent, le serveur SRV envoie les identifiants UA, UB et UC des destinataires potentiels au terminal appelant CG au cours d'une étape E24.

Ces identifiants sont reçus par le terminal appelant CG au cours d'une étape F30. Il les mémorise au cours d'une étape E35 en association avec l'identifiant IDCD du terminal appelé CD.

Nous supposerons que l'utilisateur du terminal appelant souhaite que le message soit déposé pour l'utilisateur UA, et qu'il sélectionne l'identifiant de cet utilisateur au cours d'une étape F40.

Le terminal appelant CG envoie cet identifiant au serveur vocale SRV au cours d'une étape F50 qui le reçoit au cours d'une étape E26.

Dans le mode de réalisation décrit ici, le serveur de messagerie vocale SRV fait sonner le terminal appelé (étape E28) si la condition n'est pas vérifiée (test E22) ou si la réponse du terminal appelant n'est pas reçue dans un délai déterminé (étape E26).

Dans le mode de réalisation décrit ici, au cours d'une étape E27, le serveur de messagerie vocale SRV envoie au terminal CD, l'identifiant du destinataire effectif UA sélectionné par l'appelant pour permettre son affichage sur un écran du terminal appelé CD.

Dans le mode de réalisation décrit ici, le serveur de messagerie vocale SRV et le terminal CD conforme à l'invention ont l'architecture matérielle d'un ordinateur conventionnel. Ils comportent un processeur, une mémoire vive et une mémoire morte.

Pour chacun de ces dispositifs, la mémoire morte comporte un programme d'ordinateur conforme à l'invention et constitue un support d'informations conforme à l'invention.

Plus précisément :
- le programme d'ordinateur PG du serveur de messagerie SRV comporte des instructions pour la mise en oeuvre du procédé de stockage des figures 3A ou 3B et des instructions pour la mise en oeuvre du procédé de restitution de la figure 5 ;
- le programme d'ordinateur PG du terminal appelant CG comporte des instructions pour la mise en oeuvre du procédé de dépôt de la figure 4A ;
- le programme d'ordinateur PG du terminal appelé comporte des instructions pour la mise en oeuvre du procédé de stockage des figures 4A ou 4B.

L'invention a été décrite de façon détaillée dans le contexte d'une messagerie vocale, mais elle peut s'appliquer à d'autres types de messagerie.

Dans un mode de réalisation particulier, les tables de la base de données BD sont configurées via l'interface homme-machine du terminal appelé CD.

## Revendications

1. Procédé de stockage d'un message (MSG) adressé par un terminal appelant (CG) à un terminal appelé (CD), ce procédé comportant :
- une étape (E10) de recherche d'au moins un carnet d'adresses (CAi) associé audit terminal appelé (CD) et comportant des données d'identification (IDCG) du terminal appelant (CG);
- une étape (E20) d'identification, à partir dudit au moins un carnet d'adresses (CAi), d'au moins un destinataire potentiel (DPi) dudit message parmi les utilisateurs dudit terminal appelé (CD);
- une étape (E30) de sélection d'au moins un destinataire effectif (DEi) déterminé à partir dudit au moins un destinataire potentiel (DEi) ; et
- une étape (E40) de mémorisation dudit message (MSG) dans au moins un espace réservé accessible uniquement par ledit au moins un destinataire effectif (DEi), sur présentation de son identifiant (IDi), chaque destinataire effectif pouvant accéder à au moins un desdits espaces réservés pour obtenir restitution dudit message.

2. Procédé de stockage d'un message selon la revendication 1, **caractérisé en ce que** lesdits destinataires effectifs (DEi) sont lesdits destinataires potentiels (DPi).

3. Procédé de stockage d'un message selon la revendication 1, **caractérisé en ce que** en cas d'échec de ladite étape de recherche (E10), lesdits destinataires effectifs sont (E15) :
- tous les utilisateurs du terminal appelé ; ou
- un unique destinataire effectif (PRIV) dit « privilégié » ou
- un unique destinataire effectif (TOUS) permettant d'implémenter une boîte de messages partagée par tous les utilisateurs du terminal.

4. Procédé de stockage d'un message selon la revendication 1, **caractérisé en ce qu'il** comporte, lorsqu'il a été identifié (E20) au moins deux destinataires potentiels :
- une étape (E24) d'envoi des identifiants desdits destinataires potentiels (DPi) audit terminal appelant (CG) ; et
- une étape (E26) de réception d'une réponse comportant les identifiants desdits destinataires effectifs.

5. Procédé de stockage d'un message selon la revendication 4, **caractérisé en ce qu'il** comporte :
- une étape (E22) pour vérifier une condition (COND) préalable à l'envoi (E24) des identifiants de destinataires potentiels au terminal appelant ; et
- une étape (E28) pour faire sonner ledit terminal appelé sans attendre si ladite condition n'est pas vérifiée ou à l'issue d'un délai déterminé en cas de non réception de ladite réponse comportant les identifiants de destinataires effectifs.

6. Procédé de stockage d'un message selon la revendication 1 ou 4, **caractérisé en ce que** ladite étape (E40) de mémorisation dudit message (MSG) est effectuée soit directement, soit après avoir fait sonner ledit terminal appelé (CD), aucun utilisateur du terminal appelé n'ayant pris la communication dans un délai déterminé,
le choix entre ces deux modes étant déterminé en fonction d'un indicateur de mode défini pour ledit destinataire effectif ou pour ledit terminal appelant (CNG), éventuellement en fonction de plages de temps paramétrables.

7. Procédé de stockage selon la revendication 6, **caractérisé en ce que** ledit message est mémorisé directement lorsque ledit indicateur de mode défini pour ledit destinataire effectif a une valeur déterminée.

8. Procédé pouvant être mis en oeuvre par un terminal appelant (CG) pour déposer un message (MSG) destiné à au moins un utilisateur d'un terminal appelé (CD), ce procédé comportant :
- une étape (F10) d'appel dudit terminal appelé ;
- une étape (F30) de réception, en provenance d'un serveur (BV) de messagerie associé au terminal appelé (CD), de l'identifiant d'au moins deux destinataires potentiels (DPi) auxquels ledit message peut être destiné parmi les utilisateurs dudit terminal appelé (CD) ;
- une étape (F40) de sélection de l'identifiant d'au moins un destinataire effectif (DEi) parmi les destinataires potentiels (DPi) ;
- une étape (F50) d'envoi de l'identifiant dudit au moins un destinataire effectif audit serveur (BV) ; et
- une étape (F60) d'envoi dudit message (MSG) audit serveur pour que ledit message soit mémorisé dans au moins un espace réservé accessible uniquement par ledit au moins un destinataire effectif.

9. Procédé de dépôt d'un message selon la revendication 8 comportant une étape (F35) de mémorisation desdits identifiants de destinataires potentiels (DPI) en association avec le numéro dudit terminal appelé (IDCD).

10. Procédé de restitution d'un message enregistré dans un espace réservé accessible uniquement par un destinataire effectif comportant :
- une étape (G10) de réception d'une requête (RQ), en provenance d'un terminal, pour demander la restitution dudit message ;
- une étape (G40) de restitution dudit message uniquement (G20) si ladite requête comporte un identifiant dudit destinataire effectif.

11. Procédé de restitution d'un message selon la revendication 10, **caractérisé en ce qu'il** comporte une étape (E50) d'enregistrement de règles complémentaires définissant un ordre de priorité entre des destinataires effectifs pour la restitution dudit message, la restitution dudit message étant effectuée conformément auxdites règles.

12. Procédé de restitution d'un message selon la revendication 10, **caractérisé en ce qu'il** comporte une étape (E50) d'enregistrement de données complémentaires (DCI) comportant un indicateur définissant une priorité de restitution dudit message pour un moins un desdits destinataires effectifs.

13. Procédé de restitution d'un message selon la revendication 10, **caractérisé en ce qu'il** comporte une étape (E50) d'enregistrement de règles complémentaires comportant un identifiant d'un destinataire effectif dit « privilégié »,
lesdites règles autorisant l'accès audit au moins un espace réservé par les autres destinataires effectifs, uniquement après restitution dudit message audit destinataire effectif privilégié et autorisation explicite de ce destinataire effectif privilégié.

14. Dispositif de stockage d'un message (MSG) adressé par un terminal appelant (CG) à un terminal appelé (CD), ce dispositif comportant :
- des moyens de recherche d'au moins un carnet d'adresses (CAi) associé audit terminal appelé (CD) et comportant des données d'identification (IDCG) du terminal appelant (CG);
- des moyens d'identification, à partir dudit au moins un carnet d'adresses (CAi), d'au moins un destinataire potentiel (DPi) dudit message parmi les utilisateurs dudit terminal appelé (CD);
- des moyens de sélection d'au moins un destinataire effectif (DEi) déterminé à partir dudit au moins un destinataire potentiel (DEi) ; et
- des moyens de mémorisation dudit message (MSG) dans au moins un espace réservé accessible uniquement par ledit au moins un destinataire effectif (DEi), sur présentation de son identifiant (IDi), chaque destinataire effectif pouvant accéder à au moins un desdits espaces réservés pour obtenir restitution dudit message.

15. Terminal appelant (CG) comportant :
- des moyens d'appel d'un terminal (CD) ;
- des moyens de réception, en provenance d'un serveur de messagerie associé au terminal appelé (CD), de l'identifiant d'au moins deux destinataires potentiels (DPi) auxquels ledit message peut être destiné parmi les utilisateurs dudit terminal appelé (CD) ;
- des moyens de sélection de l'identifiant d'au moins un destinataire effectif (DEi) parmi les destinataires potentiels (DPi) ;
- des moyens d'envoi de l'identifiant dudit au moins un destinataire effectif audit serveur (BV) ; et
- des moyens d'envoi dudit message (MSG) audit serveur pour que ledit message soit mémorisé dans au moins un espace réservé accessible uniquement par ledit au moins un destinataire effectif.

16. Serveur de messagerie vocale apte à restituer un message enregistré dans un espace réservé accessible uniquement par un destinataire effectif comportant :
- une étape (G10) de réception d'une requête (RQ), en provenance d'un terminal, pour demander la restitution dudit message ;
- une étape (G40) de restitution dudit message uniquement (G20) si ladite requête comporte un identifiant dudit destinataire effectif.

17. Programme d'ordinateur (PG) comportant des instructions pour l'exécution des étapes du procédé de stockage selon l'une quelconque des revendications 1 à 7 ou pour l'exécution des étapes du procédé de dépôt selon la revendication 8 ou 9, ou pour l'exécution des étapes du procédé de restitution selon l'une quelconque des revendications 10 à 13 lorsque ledit programme est exécuté par un processeur.

18. Support d'enregistrement lisible par un ordinateur sur lequel est enregistré un programme d'ordinateur (PG) comprenant des instructions pour l'exécution des étapes du procédé de stockage selon l'une quelconque des revendications 1 à 7 ou pour l'exécution des étapes du procédé de dépôt selon la revendication 8 ou 9, ou pour l'exécution des étapes du procédé de restitution selon l'une quelconque des revendications 10 à 13.
